(19) 

(11) **EP 4 801 246 A1**

(12) **EUROPEAN PATENT APPLICATION**
published in accordance with Art. 153(4) EPC

(43) Date of publication:
**02.09.2026 Bulletin 2026/36**

(21) Application number: **24907852.8**

(22) Date of filing: **28.11.2024**

(51) International Patent Classification (IPC):
***H10K 59/80*** *(2023.01)* ***G02B 1/14*** *(2015.01)*
***C09D 133/00*** *(2006.01)* ***C09D 175/04*** *(2006.01)*
***C09D 183/04*** *(2006.01)* ***C09D 7/63*** *(2018.01)*
***C09D 7/40*** *(2018.01)* ***C08J 7/04*** *(2020.01)*

(52) Cooperative Patent Classification (CPC):
**C08J 7/04; C09D 7/40; C09D 7/63; C09D 133/00; C09D 175/04; C09D 183/04; G02B 1/14; H10K 59/80**

(86) International application number:
**PCT/KR2024/019084**

(87) International publication number:
**WO 2025/135567 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2023 KR 20230186689**
**24.10.2024 KR 20240146756**

(71) Applicant: **Kolon Industries, Inc.**
**Seoul 07793 (KR)**

(72) Inventor: **AN, Byung-Joon**
**Seoul 07793 (KR)**

(74) Representative: **Ter Meer Steinmeister & Partner Patentanwälte mbB**
**Nymphenburger Straße 4**
**80335 München (DE)**

(54) **OPTICAL FILM AND DISPLAY DEVICE COMPRISING SAME**

(57) One embodiment of the present invention provides an optical film and a display device comprising same, the optical film comprising a light-transmitting substrate and a coating layer, and having a friction coefficient index value of 0.1 or less, a transmittance of 89.5% or more on the basis of a thickness of 50 μm, and a yellowness index (Y.I.) of 1.0 or less on the basis of a thickness of 50 μm, wherein the friction coefficient index is represented by relation 1. [Relation 1] Friction coefficient index = coefficient of static friction - coefficient of kinetic friction

FIG. 1

100
120
122
121
110

EP 4 801 246 A1

## Description

[Technical Field]

The present disclosure relates to an optical film and a display device including the same, and more particularly to an optical film having excellent optical properties and improved runnability.

[Background Art]

Recently, the use of an optical film instead of glass as a cover window of a display device has been considered with the goal of reducing thickness and weight and increasing the flexibility of the display device. In order for the optical film to be usable as a cover window of a display device, the optical film needs to have superior optical properties and excellent mechanical properties. For example, an optical film needs to have properties such as excellent strength, hardness, abrasion resistance, and flexibility.

In addition, when a coating layer is formed to improve optical properties, the friction coefficient of the surface of the optical film may change, which may cause problems with roll-to-roll runnability. Accordingly, research is continuously being conducted on optical films with excellent optical properties and improved runnability.

[Disclosure]

[Technical Problem]

Therefore, the present disclosure has been made in view of the above problems, and it is one aspect of the present disclosure to provide an optical film that has excellent optical properties and improved runnability by including a novel coating layer.

It is another aspect of the present disclosure to provide a display device including the optical film having excellent optical properties and improved runnability..

[Technical Solution]

In accordance with an aspect of the present disclosure, the above and other objects can be accomplished by the provision of an optical film including a light-transmitting substrate and a coating layer, wherein the optical film has a friction coefficient index of 0.1 or less, the optical film has a transmittance of 89.5% or more based on a thickness of 50 μm, and the optical film has a yellowness index (Y.I.) of 1.0 or less based on a thickness of 50 μm , wherein the friction coefficient index is represented by the following Equation 1:

[Equation 1] Friction coefficient index = static friction coefficient - kinetic friction coefficient [Equation 1]

The coating layer may include a polymer resin layer containing a polymer resin and an ultraviolet absorber, and a pigment, wherein the polymer resin includes at least one of an acryl-based resin, a urethane-based resin, or a siloxane-based resin.

The pigment may have a diameter of 100 to 200 nm.

The coating layer may contain 6 to 14 parts by weight of the pigment with respect to 100 parts by weight of the polymer resin.

The polymer resin layer may have a thickness of 73 to 95% with respect to the diameter of the pigment.

The pigment may protrude from a surface of the polymer resin layer.

In accordance with another aspect of the present disclosure, there is provided a display device including a display panel and the optical film disposed on the display panel.

[Advantageous effects]

Embodiments of the present disclosure provide an optical film that has excellent optical properties and improved runnability by including a novel coating layer.

[Description of Drawings]

FIG. 1 is a schematic diagram illustrating an optical film according to an embodiment of the present disclosure.

FIG. 2 is a cross-sectional view illustrating a part of a display device according to another embodiment of the present disclosure.

FIG. 3 is an enlarged cross-sectional view illustrating part "P" in FIG. 2.

[Best Mode]

Hereinafter, embodiments of the present disclosure will be described in detail with reference to the accompanying drawings. However, the following embodiments are illustratively provided merely for clear understanding of the present disclosure and do not limit the scope of the present disclosure.

The shapes, sizes, ratios, angles, and numbers disclosed in the drawings for describing embodiments of the present disclosure are merely examples, and the present disclosure is not limited to the illustrated details. Like reference numerals refer to like elements throughout the present specification. In the following description, when a detailed description of relevant known functions or configurations is determined to unnecessarily obscure important points of the present disclosure, the detailed description will be omitted.

In the case in which a term such as "comprise", "have", or "include" is used in the present specification, another part may also be present, unless "only" is also used. Terms in a singular form may include the plural meanings, unless noted to the contrary. Also, in construing an element, the element is to be construed as including an error range, although there is no explicit description thereof.

In describing a positional relationship, for example, when the positional relationship is described using "on", "above", "below", or "next to", the case of no contact therebetween may be included, unless "immediately" or "directly" is used.

Spatially relative terms, such as "below", "beneath", "lower", "above", and "upper", may be used herein to describe the relationship between a device or element and another device or element, as shown in the figures. It will be understood that spatially relative terms are intended to encompass different orientations of a device during the use or operation of the device, in addition to the orientation depicted in the figures. For example, if a device in one of the figures is turned upside down, elements described as "below" or "beneath" other elements would then be positioned "above" the other elements. The exemplary term "below" or "beneath" can, therefore, encompass the meanings of both "below" and "above". In the same manner, the exemplary term "above" or "upper" can encompass the meanings of both "above" and "below".

In describing temporal relationships, for example, when a temporal order is described using "after", "subsequent", "next", or "before", the case of a noncontinuous relationship may be included, unless "immediately" or "directly" is used.

It will be understood that, although the terms "first", "second", etc. may be used herein to describe various elements, these elements are not limited by these terms. These terms are only used to distinguish one element from another. Therefore, a first element could be termed a second element within the technical idea of the present disclosure.

It should be understood that the term "at least one" includes all combinations related with one or more items. For example, "at least one among a first element, a second element, and a third element" may include all combinations of two or more elements selected from among the first, second, and third elements, as well as each of the first, second, and third elements.

Features of various embodiments of the present disclosure may be partially or completely integrated or combined with each other, and may be variously interoperated with each other and driven technically. The embodiments of the present disclosure may be carried out independently from each other, or may be carried out together in an interrelated manner.

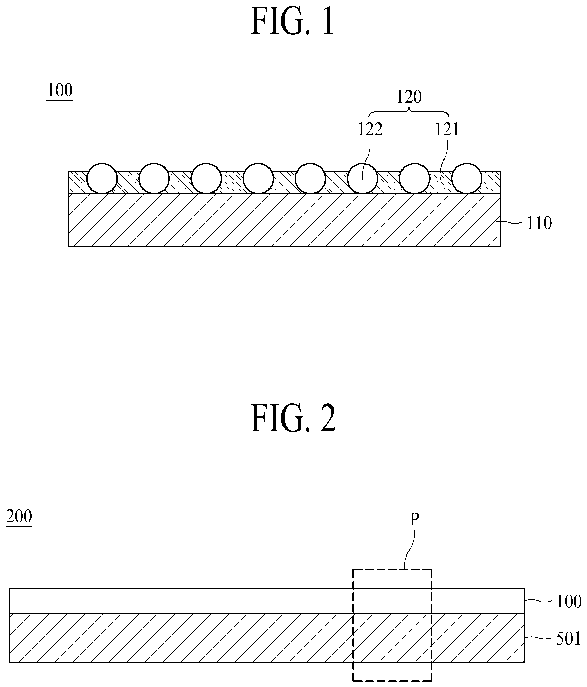

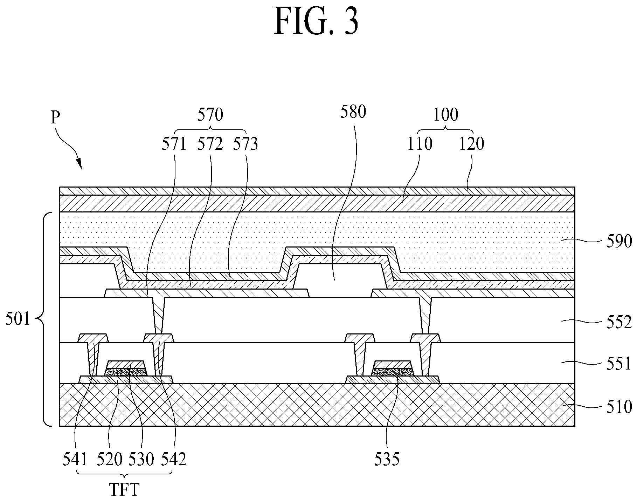

FIG. 1 is a schematic diagram illustrating an optical film 100 according to an embodiment of the present disclosure. FIG. 2 is a cross-sectional view illustrating a part of a display device 200 according to another embodiment of the present disclosure. FIG. 3 is an enlarged cross-sectional view illustrating part "P" in FIG. 2.

One embodiment of the present disclosure provides an optical film 100. According to an embodiment of the present disclosure, the optical film 100 includes a light-transmitting substrate 110 and a coating layer 120. As shown in FIG. 1, in the optical film 100 of the present disclosure, the coating layer 120 may be formed on the upper surface of the light-transmitting substrate 110. However, the present disclosure is not limited thereto and the coating layer 120 may be formed on the lower surface of the light-transmitting substrate 110.

Any material may be used as the light-transmitting substrate 110 according to an embodiment of the present disclosure as long as it can transmit light. For example, the light-transmitting substrate 110 may include a glass or a polymer resin. In particular, the polymer resin is suitable for use as a cover window for flexible displays due to excellent bendability and impact resistance.

The polymer resin may be contained in the film in various shapes and forms. For example, the polymer resin may be present as a solid powder, may be dissolved in a solution, or be present as a matrix solidified after being dissolved in a

solution. Any resin including the same repeating unit as the resin of the present disclosure may be considered the same as the polymer resin of the present disclosure, regardless of the shape and form thereof. In general, the polymer resin in the film may be present as a solidified matrix obtained by applying a polymer resin solution, followed by drying.

The polymer resin according to an embodiment of the present disclosure may be any light-transmitting resin. For example, the polymer resin may include at least one selected from cycloolefin-based derivatives, cellulosebased polymers, ethylene vinyl acetate-based copolymers, polyester-based polymers, polystyrene-based polymers, polyamide-based polymers, polyamide-imide-based polymers, polyetherimide-based polymers, polyacryl-based polymers, polyimide-based polymers, polyether sulfone-based-based polymers, polysulfone-based polymers, polyethylene-based polymers, polypropylene-based polymers, polymethylpentenebased polymers, polyvinyl chloride-based polymers, polyvinylidene-based chloride polymers, polyvinyl alcoholbased polymers, polyvinyl acetal-based polymers, polyether ketone-based polymers, polyether ether ketone-based polymers, polymethyl methacrylate-based polymers, polyethylene terephthalate-based polymers, polybutylene terephthalate-based polymers, polyethylene naphthalatebased polymers, polycarbonate-based polymers, polyurethanebased polymers, and epoxy-based polymers. Preferably, the polymer resin according to an embodiment of the present disclosure may include at least one of polyimide-based polymers, polyamide-based polymers, or polyamide-imide-based polymers.

According to an embodiment of the present disclosure, the light-transmitting substrate 110 may be any one of polyimide-based substrates, polyamide-based substrates, and polyamide-imide-based substrates. However, the embodiments of the present disclosure are not limited thereto and any substrate may be used as the light-transmitting substrate 110 as long as it is light-transmissive.

In one embodiment of the present disclosure, the optical film 100 has a friction coefficient index represented by the following Equation 1 of 0.1 or less.

[Equation 1] Friction coefficient index = static friction coefficient - kinetic friction coefficient [Equation 1]

wherein the static friction coefficient and kinetic friction coefficient are measured in accordance with ASTM D1894 using a friction coefficient meter (Ametek Lloyd instrument LF Plus).

Specifically, an optical film sample cut to a size of 100 mm x 63.5 mm was attached to the bottom of a 63.5 $mm^2$ metal block (200 g), a film with a size of 20 x 10 cm was placed on the bottom of the metal block and the metal block was pulled at a speed of 180 mm/min to allow the metal block to move 130 mm, and then the metal block was stopped. The static friction coefficient and kinetic friction coefficient were measured from the data from when the metal block was pulled and the data to when the metal block was stopped.

When the static friction coefficient of the optical film 100 according to one embodiment of the present disclosure is 0.5 or less and the friction coefficient index is 0.1 or less, the optical film 100 has excellent process runnability and rollability.

On the other hand, when the friction coefficient index of the optical film 100 exceeds 0.1, the runnability and slipperiness of the optical film are poor, and scratches may occur during rolling.

According to one embodiment of the present disclosure, the optical film 100 may have a transmittance of 89.5% or more based on a thickness of 50 μm.

Here, the transmittance means a result value obtained by cutting the manufactured optical film into an optical film sample with a size of 50 mm x 50 mm, measuring the transmittance values of the sample five times in accordance with ASTM-D1003 using a haze meter (model name: HM-150) from MURAKAMI Co., Ltd., and calculating an average of the resulting five transmittance values.

According to one embodiment of the present disclosure, the optical film has an yellowness index (Y.I.) of 1.0 or less based on a thickness of 50 μm.

Here, the yellowness index (Y.I.) means a result value obtained by cutting the manufactured optical film to a sample with a size of 50 mm × 50 mm, measuring a yellowness index of the sample 5 times using a color difference meter (model name: CM-3600A) from Konica Minolta, Inc. in accordance with ASTM D1925 in a D65 light source at a viewing angle of 2° in a transmission mode, and calculating an average of the measured five yellowness index values.

According to one embodiment of the present disclosure, the optical film has a haze of 1.0% or less based on a thickness of 50 μm.

At this time, the haze means a resulting value obtained by cutting the manufactured optical film to an optical film sample with a size of 50 mm x 50 mm, measuring the haze values of the sample five times in accordance with ASTM-D1003 using a haze meter (model name: HM-150) from MURAKAMI Co., Ltd., and calculating an average of the resulting five haze values.

According to one embodiment of the present disclosure, the optical film has a surface roughness (Ra) of 30 to 80 nm based on a thickness of 50 μm.

At this time, the surface roughness (Ra) was obtained by measuring the surface roughness (Ra) of an area of 1 mm x 1 mm using a 10x lens with a non-contact 3D micro-shape measurement system, NV-2000, from NanoSystem Co.,

Ltd.

According to one embodiment of the present disclosure, when the surface roughness (Ra) of the optical film 100 is 30 to 80 nm, the process runnability and rollability are excellent.

On the other hand, when the surface roughness (Ra) of the optical film 100 is outside the range of 30 to 80 nm, the runnability and slipperiness of the optical film are poor and scratches may occur during rolling.

According to one embodiment of the present disclosure, the coating layer 120 includes a polymer resin layer 121 and a pigment 122.

Specifically, the polymer resin layer 121 contains a polymer resin and an ultraviolet absorber.

According to one embodiment of the present disclosure, the polymer resin may include at least one selected from an acryl-based resin, a urethane-based resin, and a siloxane-based resin. The polymer resin may include one selected from an acryl-based resin, a urethane-based resin, and a siloxane-based resin depending on the type of the light-transmitting substrate 110 and the physical properties of the optical film 100.

According to one embodiment of the present disclosure, when the polymer resin layer 121 includes an ultraviolet absorber, the ultraviolet absorber absorbs ultraviolet rays incident on the optical film 100, thereby suppressing peeling of the light-transmitting substrate 110 and the coating layer 120, and reducing the increase in yellowness index (Y.I.).

According to one embodiment of the present disclosure, the type of the ultraviolet absorber is not limited and any ultraviolet absorber may be used as long as it suppresses peeling of the light-transmitting substrate 110 and the coating layer 120, and reduces the increase in yellowness index (Y.I.).

According to one embodiment of the present disclosure, the polymer resin layer 121 may contain 0.01 to 0.5 parts by weight of the ultraviolet absorber with respect to 100 parts by weight of the polymer resin, but is not limited thereto.

According to one embodiment of the present disclosure, the polymer resin layer 121 may further contain an initiator for polymerization of the polymer resin, and examples of the initiator include photopolymerization initiators such as onium salts or organometallic salts and thermal polymerization initiators such as amine or imidazole, but are not limited thereto. The amount of the initiator added is not particularly limited and may be about 0.5 to about 3.0 parts by weight with respect to 100 parts by weight of the polymer resin, but is not limited thereto.

Generally, when the coating layer 120 includes a polymer resin layer 121 containing an ultraviolet absorber, peeling of the light-transmitting substrate 110 and the coating layer 120 is suppressed and the increase in yellowness index (Y.I.) is suppressed, but there is a problem that the initial yellowness index (Y.I.) of the optical film 100 increases.

In other words, in order to reduce an initial yellowness index (Y.I.), a pigment may be added, but a general pigment has problems of reducing transmittance and runnability, although it has an advantage of reducing the initial yellowness index (Y.I.) of the optical film 100.

Therefore, in order to reduce the increase in the initial yellowness index (Y.I.), while improving both transmittance and runnability, the diameter and content of the pigment 122 and the thickness of the polymer resin layer 121 may be adjusted according to one embodiment of the present disclosure.

According to one embodiment of the present disclosure, the pigment 122 may have a diameter of 100 to 200 μm. Specifically, when the diameter of the pigment 122 is 100 to 200 μm, the increase in the initial yellowness index (Y.I.) of the optical film 100 is suppressed, the transmittance is secured, and the runnability is improved.

On the other hand, when the diameter of the pigment 122 exceeds 200 μm, there may be a problem in which the haze of the optical film 100 increases.

In addition, when the diameter of the pigment 122 is less than 100 μm, a problem with runnability may occur.

According to one embodiment of the present disclosure, the coating layer 120 may contain 6 to 14 parts by weight of the pigment 122 with respect to 100 parts by weight of the polymer resin. Specifically, when the pigment 122 is contained in an amount of 6 to 14 parts by weight with respect to 100 parts by weight of the polymer resin, an increase in the initial yellowness index (Y.I) of the optical film 100 is suppressed, the transmittance is secured, and the runnability is improved.

On the other hand, when the content of the pigment 122 exceeds 14 parts by weight with respect to 100 parts by weight of the polymer resin, there may be a problem in which the haze of the optical film 100 increases.

In addition, when the content of the pigment 122 is less than 6 parts by weight with respect to 100 parts by weight of the polymer resin, a problem with runnability may occur.

According to one embodiment of the present disclosure, the pigment 122 protrudes from the surface of the polymer resin layer 121. Specifically, FIG. 1 illustrates a configuration in which a portion of the pigment 122 protrudes from one surface of the polymer resin layer 121. Although FIG. 1 illustrates a configuration in which the entirety of the pigment 122 of the coating layer 120 protrudes from the polymer resin layer 121, one embodiment of the present disclosure is not limited thereto and at least a portion of the pigments 122 may protrude from the surface of the polymer resin layer 121.

According to one embodiment of the present disclosure, the polymer resin layer 121 may have a thickness of 73 to 95% with respect to the diameter of the pigment 122. Specifically, when the thickness of the polymer resin layer 121 is 73 to 95% of the diameter of the pigment 122, an increase in the initial yellowness index (Y.I) of the optical film 100 is suppressed, the transmittance is secured, and the runnability is improved.

On the other hand, when the thickness of the polymer resin layer 121 exceeds 95% of the diameter of the pigment

122, there may be problems in which process runnability deteriorates and the transmittance of the optical film decreases.

In addition, when the thickness of the polymer resin layer 121 is less than 73% of the diameter of the pigment 122, the process runnability and transmittance may be improved, but the haze may increase and the effect of reducing the yellowness index (Y.I.) may decrease.

According to one embodiment of the present disclosure, the coating layer 120 may further contain an additive. The additive may include an additive that increases the surface energy of the coating layer to improve adhesive strength or improve runnability during additional functional surface treatment. When the coating layer 120 contains an additive, the runnability may be improved by setting a friction coefficient index to 0.1 or less.

According to one embodiment of the present disclosure, the optical film 100 may be light-transmissive and flexible. For example, the optical film according to one embodiment of the present disclosure may be bendable, foldable, and rollable.

According to one embodiment of the present disclosure, the optical film 100 may further include a hard coating layer on an upper surface of the coating layer 120.

Although not shown in the drawing, the optical film 100 further including the hard coating layer may have a configuration in which the light-transmitting substrate 110, the coating layer 120, and the hard coating layer are laminated in this order.

The hard coating layer protects the optical film 100 and the adherend to which the optical film 100 is attached from the external environment, and according to one embodiment of the present disclosure, the hard coating layer may include at least one of a siloxane-based resin, an acryl-based resin, a urethane-based resin, or an epoxy-based resin.

Referring to FIG. 2, the display device 200 according to another embodiment of the present disclosure includes a display panel 501 and an optical film 100 on the display panel 501.

Referring to FIGs. 2 and 3, the display panel 501 includes a substrate 510, a thin film transistor TFT on the substrate 510, and an organic light-emitting device 570 connected to the thin film transistor TFT. The organic light-emitting device 570 includes a first electrode 571, an organic light-emitting layer 572 on the first electrode 571, and a second electrode 573 on the organic light-emitting layer 572. The display device 200 shown in FIGs. 2 and 3 is an organic light-emitting display device.

The substrate 510 may be formed of glass or plastic. Specifically, the substrate 510 may be formed of plastic such as a polyimide-based resin or an optical film. Although not shown, a buffer layer may be disposed on the substrate 510.

The thin film transistor TFT is disposed on the substrate 510. The thin film transistor TFT includes a semiconductor layer 520, a gate electrode 530 that is insulated from the semiconductor layer 520 and at least partially overlaps the semiconductor layer 520, a source electrode 541 connected to the semiconductor layer 520, and a drain electrode 542 that is spaced apart from the source electrode 541 and is connected to the semiconductor layer 520.

Referring to FIG. 3, a gate insulating layer 535 is disposed between the gate electrode 530 and the semiconductor layer 520. An interlayer insulating layer 551 may be disposed on the gate electrode 530, and the source electrode 541 and the drain electrode 542 may be disposed on the interlayer insulating layer 551.

A planarization layer 552 is disposed on the thin film transistor TFT to planarize the top of the thin film transistor TFT.

A first electrode 571 is disposed on the planarization layer 552. The first electrode 571 is connected to the thin film transistor TFT through a contact hole provided in the planarization layer 552.

A bank layer 580 is disposed on the planarization layer 552 in a part of the first electrode 571 to define pixel areas or light-emitting areas. For example, the bank layer 580 is disposed in the form of a matrix at the boundaries between a plurality of pixels to define the respective pixel regions.

The organic light-emitting layer 572 is disposed on the first electrode 571. The organic light-emitting layer 572 may also be disposed on the bank layer 580. The organic light-emitting layer 572 may include one light-emitting layer, or two or more light-emitting layers stacked in a vertical direction. Light having any one color among red, green, and blue may be emitted from the organic light-emitting layer 572, and white light may be emitted therefrom.

The second electrode 573 is disposed on the organic light-emitting layer 572.

The first electrode 571, the organic light-emitting layer 572, and the second electrode 573 may be stacked to constitute the organic light-emitting device 570.

Although not shown, when the organic light-emitting layer 572 emits white light, each pixel may include a color filter for filtering the white light emitted from the organic light-emitting layer 572 based on a particular wavelength. The color filter is formed on the light path.

A thin-film encapsulation layer 590 may be disposed on the second electrode 573. The thin-film encapsulation layer 590 may include at least one organic layer and at least one inorganic layer, and the at least one organic layer and the at least one inorganic layer may be alternately disposed.

The optical film 100 is disposed on the display panel 501 having the stack structure described above.

Hereinafter, the present disclosure will be described in more detail with reference to exemplary embodiments. However, the present disclosure is not limited to preparation examples or examples described below.

**Example 1**

2-(3,4-epoxycyclohexyl)ethyltrimethoxysilane (TCI), TEOS (tetraethyl orthosilicate, Sigma-Aldrich), and H2O were mixed in a ratio of 747.66 mL : 38.28 mL : 93.88 mL, the mixture was added to a 1,500 mL flask, and then 0.1g of sodium hydroxide was further added as a catalyst and stirred at 60°C for 10 hours. Then, the reaction product was filtered using a 0.45 μm Teflon filter to obtain an epoxy-based siloxane resin.

600 mL of a dilution of MEK (methyl ethyl ketone) and MIBK (methyl isobutyl ketone) at a ratio of 2:8 was added to the epoxy-based siloxane resin prepared above, IRGACURE 250 (BASF Corporation) as a photoinitiator was added in an amount of 3 parts by weight based on 100 parts by weight of the prepared epoxy-based siloxane resin, Tinuvin 477 (solid content of 80 wt%, BASF Corporation) as an ultraviolet absorber was further added in an amount of 2.5 parts by weight based on 100 parts by weight of the epoxy-based siloxane resin on a solid content basis, Tinuvin 479 (solid content of 100 wt%, BASF Corporation) as an ultraviolet absorber was further added in an amount of 2.5 parts by weight based on 100 parts by weight of the epoxy-based siloxane resin on a solid content basis, SWN VILOET 899W (solid content of 25 wt%, Ilsam Co., Ltd.), as a pigment having an average particle size of about 150 nm, was added in an amount of 10 parts by weight based on 100 parts by weight of the epoxy-based siloxane resin, on a solid content basis, and Glide 406 (solid content of 50 wt%, TEGO, Inc.) as an additive was added in an amount of 0.25 parts by weight, based on 100 parts by weight of the epoxy-based siloxane resin on a solid content basis, to obtain a coating composition.

The coating composition was applied to the upper surface of a transparent polyimide substrate (A_50, Kolon Industries) using a No. 4 Mayer bar and then dried at 100 ° C/10 min.

Then, the result was exposed to light with a dose of 1J/cm$^2$ using an ultraviolet lamp having a wavelength of 315 nm to produce an optical film having a thickness of 50 μm and including a polymer resin layer having a thickness of 130 nm.

**Example 2**

An optical film was produced in the same manner as in Example 1 except that the thickness of the polymer resin layer was 110 nm.

**Example 3**

An optical film was produced in the same manner as in Example 1 except that the thickness of the polymer resin layer was 140 nm.

**Comparative Examples 1-6**

Optical films were produced in the same manner as in Example 1 in accordance with the conditions shown in Table 1 and are referred to as Comparative Examples 1 to 6.

[Table 1]

| Item | Thickness of polymer coating layer (nm) | Type of pigment | Diameter of pigment (nm) | Content of pigment (parts by weight) |
|---|---|---|---|---|
| Example 1 | 130 | First pigment | 150 | 10 |
| Example 2 | 110 | First pigment | 150 | 10 |
| Example 3 | 140 | First pigment | 150 | 10 |
| Example 4 | 130 | First pigment | 150 | 6 |
| Example 5 | 110 | First pigment | 150 | 14 |
| Comparative Example 1 | 150 | First pigment | 150 | 10 |
| Comparative Example 2 | 100 | First pigment | 150 | 10 |
| Comparative Example 3 | 70 | Second pigment | 80 | 10 |
| Comparative Example 4 | 180 | Third pigment | 200 | 10 |
| Comparative Example 5 | 130 | First pigment | 150 | 5 |
| Comparative Example 6 | 130 | First pigment | 150 | 15 |

The first pigment, second pigment, and third pigment shown in Table 1 are as follows. First pigment: SWN VILOET 899W (Ilsam Co., Ltd.)

Second pigment: OP2708B-80N (SAT NANO Co., Ltd.)

Third pigment: OP2708B-200N (SAT NANO Co., Ltd.)

In Table 1, "parts by weight" means a weight with respect to 100 parts by weight of the polymer resin.

The following physical properties of the optical films manufactured in Examples 1 to 3 and Comparative Examples 1 to 6 were measured as follows.

**(1) Measurement of transmittance (%)**

The transmittance was obtained by cutting the manufactured optical film into a sample with a size of 50 mm x 50 mm, measuring the transmittance values of the sample five times in accordance with ASTM-D1003 using a haze meter (model name: HM-150) from MURAKAMI Co., Ltd., and calculating an average of the resulting five transmittance values.

**(2) Measurement of yellowness index (Y.I.)**

The yellowness index (Y.I.) was obtained by cutting the manufactured optical film into a sample with a size of 50 mm × 50 mm, measuring a yellowness index of the sample 5 times using a color difference meter, for example, a color difference meter from Konica Minolta, Inc. (model name: CM-3600A) in accordance with ASTM D1925 using a D65 light source at a viewing angle of 2° in a transmission mode and calculating an average of the measured five yellowness index values.

**(3) Measurement of haze**

The haze was obtained by cutting the manufactured optical film into a sample with a size of 50 mm x 50 mm, measuring the haze values of the sample five times in accordance with ASTM-D1003 using a haze meter (model name: HM-150) from MURAKAMI Co., Ltd., and calculating an average of the resulting five haze values.

**(4) Measurement of static friction coefficient and kinetic friction coefficient**

The static friction coefficient and kinetic friction coefficient were measured in accordance with ASTM D1894 using a friction coefficient meter (Ametek Lloyd instrument LF Plus).

Specifically, an optical film sample cut into a size of 100 mm x 63.5 mm was attached to the bottom of a 63.5 $mm^2$ metal block (200 g), a film with a size of 20 x 10 cm was placed on the bottom of the metal block, and the metal block was pulled at a speed of 180 mm/min to allow the metal block to move 130 mm, and then the metal block was stopped. The static friction coefficient and kinetic friction coefficient were measured from the data from when the metal block was pulled and the data to when the metal block was stopped.

**(5) Measurement of friction coefficient index**

The friction coefficient index is calculated in accordance with the following Equation 1 using the measured static friction coefficient and kinetic friction coefficient

Friction coefficient index = static friction coefficient - kinetic friction coefficient [Equation 1]

**(6) Surface roughness (Ra)**

The surface roughness (Ra) was obtained by measuring the surface roughness (Ra) of an area of 1 mm x 1 mm using a 10x lens with a non-contact 3D micro-shape measurement system, NV-2000, from NanoSystem Co., Ltd.

The results of measurement are as shown in Table 2 below.

[Table 2]

| Item | Transmittance (%) | Haze (%) | Yellowness index (Y.I.) | Static friction coefficient | Kinetic friction coefficient | Friction coefficient index | Surface roughness (Ra) ($\mu$m) |
|---|---|---|---|---|---|---|---|
| Example 1 | 89.7 | 0.9 | 0.7 | 0.45 | 0.37 | 0.08 | 40nm |
| Example 2 | 89.9 | 1.0 | 0.9 | 0.47 | 0.38 | 0.09 | 43nm |
| Example 3 | 89.5 | 0.8 | 0.6 | 0.42 | 0.35 | 0.07 | 33nm |
| Example 4 | 89.8 | 0.8 | 0.8 | 0.41 | 0.32 | 0.09 | 31nm |
| Example 5 | 89.6 | 1.0 | 0.6 | 0.49 | 0.42 | 0.07 | 50nm |
| Comparative Example 1 | 89.1 | 0.6 | 0.5 | 0.56 | 0.45 | 0.11 | 22nm |
| Comparative Example 2 | 90.0 | 1.3 | 1.1 | 0.41 | 0.37 | 0.04 | 85nm |
| Comparative Example 3 | 90.2 | 0.8 | 1.1 | 0.55 | 0.43 | 0.12 | 27nm |
| Comparative Example 4 | 88.8 | 1.3 | 0.5 | 0.46 | 0.38 | 0.08 | 34nm |
| Comparative Example 5 | 89.8 | 0.7 | 1.5 | 0.48 | 0.39 | 0.09 | 14nm |
| Comparative Example 6 | 88.5 | 1.1 | 0.2 | 0.37 | 0.30 | 0.07 | 80nm |

As can be seen from results of measurement in Table 2, the optical film 100 according to the embodiment of the present disclosure satisfies the requirements for transmittance, haze, yellowness index, friction coefficient index, and surface roughness (Ra).

## Claims

**1.** An optical film comprising:

a light-transmitting substrate; and
a coating layer,
wherein the optical film has a friction coefficient index of 0.1 or less,
the optical film has a transmittance of 89.5% or more based on a thickness of 50 μm, and
the optical film has a yellowness index (Y.I.) of 1.0 or less based on a thickness of 50 μm,
wherein the friction coefficient index is represented by the following Equation 1:

Friction coefficient index = static friction coefficient - kinetic friction coefficient [Equation 1]

**2.** The optical film according to claim 1, wherein the optical film has a surface roughness (Ra) of 30 to 80 nm.

**3.** The optical film according to claim 1, wherein the coating layer comprises:

a polymer resin layer containing a polymer resin and an ultraviolet absorber; and
a pigment,
wherein the polymer resin comprises at least one of an acryl-based resin, a urethane-based resin, or a siloxane-based resin.

**4.** The optical film according to claim 3, wherein the pigment has a diameter of 100 to 200 nm.

**5.** The optical film according to claim 3, wherein the coating layer comprises 6 to 14 parts by weight of the pigment with respect to 100 parts by weight of the polymer resin.

**6.** The optical film according to claim 3, wherein the polymer resin layer has a thickness of 73 to 95% with respect to the diameter of the pigment.

**7.** The optical film according to claim 3, wherein the pigment protrudes from a surface of the polymer resin layer.

**8.** The optical film according to claim 1, wherein the static friction coefficient is 0.5 or less.

**9.** The optical film according to claim 1, wherein the optical film has a haze of 1.0% or less based on a thickness of 50 μm.

**10.** A display device comprising:

a display panel; and
the optical film according to any one of claims 1 to 9 disposed on the display panel.

FIG. 1

100
120
122
121
110

FIG. 2

200
P
100
501

# FIG. 3

P
570
571 572 573
580
100
110 120
590
501
552
551
510
541 520 530 542
TFT
535

**INTERNATIONAL SEARCH REPORT**

International application No. **PCT/KR2024/019084**

**A. CLASSIFICATION OF SUBJECT MATTER**

**H10K 59/80**(2023.01)i; **G02B 1/14**(2015.01)i; **C09D 133/00**(2006.01)i; **C09D 175/04**(2006.01)i; **C09D 183/04**(2006.01)i; **C09D 7/63**(2018.01)i; **C09D 7/40**(2018.01)i; **C08J 7/04**(2006.01)i

According to International Patent Classification (IPC) or to both national classification and IPC

**B. FIELDS SEARCHED**

Minimum documentation searched (classification system followed by classification symbols)

H10K 59/80(2023.01); B32B 27/08(2006.01); B32B 27/20(2006.01); C08J 5/18(2006.01); C08J 7/04(2006.01); G02B 5/02(2006.01); G02B 5/04(2006.01); G02B 5/20(2006.01); G02F 1/1335(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 코팅층(coating layer), 마찰계수 지수(friction coefficient index), 정지 마찰계수 (static friction coefficient), 운동 마찰계수(kinetic friction coefficient), 광학 필름(optical film), 고분자 수지(polymer resin), 안료(pigment)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0047127 A (LG CHEM, LTD.) 07 May 2020 (2020-05-07)<br>See paragraphs [0081]-[0095]; and claims 1, 4-5 and 15-16. | 1-10 |
| Y | KR 10-1605413 B1 (SKC CO., LTD.) 22 March 2016 (2016-03-22)<br>See paragraphs [0070]-[0071] and [0085]; and claim 1. | 1-10 |
| Y | KR 10-2545627 B1 (TOPPAN PRINTING CO., LTD.) 21 June 2023 (2023-06-21)<br>See paragraph [0034]; claim 1; and figure 1. | 2,5 |
| Y | KR 10-2008-0056381 A (KOLON CORPORATION) 23 June 2008 (2008-06-23)<br>See abstract; paragraphs [0024]-[0025], [0048] and [0051]-[0052]; and figure 2. | 6-7 |
| A | KR 10-2019-0078089 A (LG CHEM, LTD.) 04 July 2019 (2019-07-04)<br>See claims 1-4; and figure 1. | 1-10 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 February 2025** | **28 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/019084**

| Patent document cited in search report | Publication date (day/month/year) | Patent family member(s) | Publication date (day/month/year) |
|---|---|---|---|
| KR 10-2020-0047127 A | 07 May 2020 | CN 112203853 A | 08 January 2021 |
| | | CN 112203853 B | 18 November 2022 |
| | | JP 2021-524817 A | 16 September 2021 |
| | | JP 7351068 B2 | 27 September 2023 |
| | | KR 10-2316432 B1 | 21 October 2021 |
| | | US 11958987 B2 | 16 April 2024 |
| | | US 2021-0230449 A1 | 29 July 2021 |
| | | WO 2020-085869 A1 | 30 April 2020 |
| KR 10-1605413 B1 | 22 March 2016 | KR 10-1594542 B1 | 16 February 2016 |
| | | KR 10-1605411 B1 | 22 March 2016 |
| | | KR 10-1647470 B1 | 10 August 2016 |
| | | KR 10-1647475 B1 | 10 August 2016 |
| | | KR 10-2015-0077993 A | 08 July 2015 |
| | | KR 10-2015-0084591 A | 22 July 2015 |
| | | KR 10-2015-0094992 A | 20 August 2015 |
| | | KR 10-2015-0099003 A | 31 August 2015 |
| | | KR 10-2016-0079551 A | 06 July 2016 |
| | | TW 201546172 A | 16 December 2015 |
| | | TW I685539 B | 21 February 2020 |
| | | WO 2015-102339 A1 | 09 July 2015 |
| KR 10-2545627 B1 | 21 June 2023 | CN 107148340 A | 08 September 2017 |
| | | EP 3219482 A1 | 20 September 2017 |
| | | EP 3219482 B1 | 07 February 2024 |
| | | JP 6572906 B2 | 11 September 2019 |
| | | KR 10-2017-0086506 A | 26 July 2017 |
| | | TW 201621353 A | 16 June 2016 |
| | | TW I661235 B | 01 June 2019 |
| | | US 11243335 B2 | 08 February 2022 |
| | | US 2017-0235025 A1 | 17 August 2017 |
| | | WO 2016-076322 A1 | 19 May 2016 |
| KR 10-2008-0056381 A | 23 June 2008 | CN 101595402 A | 02 December 2009 |
| | | CN 101595402 B | 19 January 2011 |
| | | KR 10-1192493 B1 | 17 October 2012 |
| | | TW 200842412 A | 01 November 2008 |
| | | US 2009-0316269 A1 | 24 December 2009 |
| | | WO 2008-075876 A1 | 26 June 2008 |
| KR 10-2019-0078089 A | 04 July 2019 | None | |

Form PCT/ISA/210 (patent family annex) (July 2022)